# EUROPEAN PATENT APPLICATION

(11) **EP 4 564 221 A1**
(43) Date of publication of application: **04.06.2025**
(21) Application number: 23213063.3
(22) Date of filing: 29.11.2023
(51) Int. Cl.: G06F 40/30, G06F 40/237, G06N 3/08, G06N 5/02

(54) **METHOD AND SYSTEM FOR ADAPTING A LARGE-SCALE LANGUAGE MODEL TO AN INDUSTRIAL DOMAIN**

(71) Applicant: Siemens Aktiengesellschaft, 80333 München (DE)
(72) Inventor: Buckley, Mark, 81829 München (DE); Hubauer, Thomas, 85748 Garching bei München (DE)
(74) Representative: Siemens Patent Attorneys

(57) **Abstract**

For adapting a large-scale language model (LLM) to an industrial domain, a graph database stores a domain-specific knowledge graph (KG_{D}) containing instance-level semantic information about the industrial domain, including true triple statements about physical entities from the industrial domain and their interrelation. A knowledge graph to corpus translator (KG2CT) converts the domain-specific knowledge graph (KG_{D}) into a natural language corpus (NLC). A domain adaptation component (DAC) pre-trains the large-scale language model (LLM) with the natural language corpus (NLC) to a provide a domain-adapted large-scale language model (LLM_{D}). This approach does not require any assumptions on the structure of the domain-specific knowledge graph, for example, it does not require the domain-specific knowledge graph to contain only instance data. Neither does it need linguistic templates since the verbalization of triples can be built on their existing labels or relation names. The triple-based information encoding of RDF facilitates a natural translation into language during the converting operation. Advantageous embodiments create coherent, contextualised documents which describe local areas of the domain-specific knowledge graph. This increases the information content of individual inputs compared to systems which convert e.g. single triples or random samples of individual triples.

## Description

The recent advent of large-scale language models (LLMs) has shown an impressive capability of generating human-like language in a consistent way based on a statistical model trained on a large corpus of human-generated texts, taken typically from the public internet. However, only shortly after making the most recent generation of LLMs such as GPT-3 available to the public using, for instance, ChatGPT, examples abounded demonstrating the lack of factual correctness of the generated texts. Examples for this include, among others, statements such as Adolf Hitler having been sentenced to death in the Nuremberg trials. While this statement is statistically plausible since a number of other Nazi leaders were tried and sentenced there, it clearly demonstrates a core weakness of LLMs: a lack of correctness in the generated statements.

It is an object of the present invention to identify a problem in the prior art and to find a technical solution for this.

The objectives of the invention are solved by the independent claims. Further advantageous arrangements and embodiments of the invention are set forth in the respective dependent claims.

According to the method for adapting a large-scale language model to an industrial domain, wherein the large-scale language model is configured for pre-training with a self-supervised learning objective, the following operations are performed by components, wherein the components are hardware components and/or software components executed by one or more processors:
- storing, by a graph database, a domain-specific knowledge graph containing instance-level semantic information about the industrial domain, including true triple statements about physical entities from the industrial domain and their interrelation,
- converting, by a knowledge graph to corpus translator, the domain-specific knowledge graph into a natural language corpus, and
- pre-training, by a domain adaptation component, the large-scale language model with the natural language corpus to a provide a domain-adapted large-scale language model.

The system for adapting a large-scale language model to an industrial domain, wherein the large-scale language model is configured for pre-training with a self-supervised learning objective, comprises the following components, wherein the components are hardware components and/or software components executed by one or more processors:
- a graph database, configured for storing a domain-specific knowledge graph containing instance-level semantic information about the industrial domain, including true triple statements about physical entities from the industrial domain and their interrelation,
- a knowledge graph to corpus translator, configured for converting the domain-specific knowledge graph into a natural language corpus, and
- a domain adaptation component, configured for pre-training the large-scale language model with the natural language corpus to a provide a domain-adapted large-scale language model.

The following advantages and explanations are not necessarily the result of the object of the independent claims. Rather, they may be advantages and explanations that only apply to certain embodiments or variants.

In connection with the invention, unless otherwise stated in the description, the terms "training", "generating", "computer-aided", "calculating", "determining", "reasoning", "retraining" and the like relate preferably to actions and/or processes and/or processing steps that change and/or generate data and/or convert the data into other data, the data in particular being or being able to be represented as physical quantities, for example as electrical impulses.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, devices, or any other communication devices that can process data with computer support, processors, and other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk or a Disk.

In most scenarios, the large-scale language model has already been pre-trained before the pre-training operation of the method, so the pre-training operation can be understood as a continuation of the pre-training of the large-scale language model, wherein this continuation serves the purpose of domain adaptation.

The method and system, or at least some of their embodiments, provide a domain adaptation of large-scale language models using verbalized knowledge graphs.

The method and system, or at least some of their embodiments, do not require any assumptions on the structure of the domain-specific knowledge graph, for example, they do not require the domain-specific knowledge graph to contain only instance data. Furthermore, the method and system, or at least some of their embodiments, do not need any linguistic templates either since a verbalization of triples can be built on their existing labels or relation names.

The method and system, or at least some of their embodiments, integrate knowledge graphs with large-scale language models in order to address the lack of correctness of the output of large-scale language models.

The domain adaptation phase can be computationally intensive; however, it is a one-off procedure which only needs to be repeated if the content of the domain-specific knowledge graph changes significantly over time. Well known methods for training Transformer-based language models make the domain adaptation phase of the current embodiment parallelisable and efficient.

In an embodiment of the method and system, the natural language corpus is a set of documents, each consisting of a sequence of sentences in natural language, or a sequence of sentences in natural language, or a set of sentences in natural language.

In another embodiment of the method and system, the natural language corpus contains a set of documents, each consisting of a sequence of sentences in natural language, and/or a sequence of sentences in natural language, and/or a set of sentences in natural language.

In another embodiment of the method and system, the domain-specific knowledge graph is represented using the W3C standard RDF, in particular including at least one of its schema-level extensions.

The triple-based information encoding of RDF facilitates a natural translation into language during the converting operation.

In another embodiment of the method and system, the domain-specific knowledge graph is created by converting a knowledge graph into an RDF-based representation.

In another embodiment of the method and system, the domain-specific knowledge graph contains schema-level information, in particular rules.

According to this embodiment, the domain-specific knowledge graph is a machine-understandable representation which includes both factual as well as generalized knowledge.

In another embodiment of the method and system, before or as part of the converting operation, upper-level industrial ontologies that are referenced in the domain-specific knowledge graph are incrementally included into the domain-specific knowledge graph.

To implement this inclusion, the domain-specific knowledge graph itself can be extended with the inclusions and then converted during the converting operation, or a temporary graph can be created from the domain-specific knowledge graph to be extended with the inclusions and then converted in the converting operation.

Being focused specifically on industry use cases, this embodiment expects the schema part of the domain-specific knowledge graph KG_{D} to be aligned against industry-relevant upper-level ontologies. As the complete import hierarchy of the domain-specific knowledge graph KG_{D} is also passed into the natural language corpus during the conversion, the current embodiment therefore by design includes industry-relevant knowledge beyond what is explicitly represented in the domain-specific knowledge graph KG_{D}.

Because the natural language corpus serving as training data for the pre-training operation is also created from ontologies, the current embodiment can have access to privately maintained ontological information, which is by definition not part of the training data of public large-scale language models. This improves the domain adaptation phase in the sense that the domain-adapted large-scale language model is able to compute better representations for domain-specific content, without having to introduce special machinery to handle private ontologies during the converting operation.

In another embodiment of the method and system, the natural language corpus also includes original natural language documents describing the domain.

In other words, the domain adaptation can also be performed with a combination of knowledge graph-derived documents and traditional, original natural language documents, if these are available, to achieve the best possible representations for the domain in question.

In another embodiment of the method and system, the knowledge graph to corpus translator contains a random walk generator and a triple verbalizer,
- wherein the random walk generator generates random walks through the domain-specific knowledge graph, wherein each random walk consists of a sequence of triples, wherein each triple is a triple statement consisting of a subject, a predicate and an object, and wherein the object of each triple in the random walk is the subject of the following triple, except for a final triple that has no following triple,
- wherein the triple verbalizer sequentially verbalizes each sequence of triples by expressing each triple in a sentence, thereby forming a sequence of sentences for each random walk, and
- wherein natural language corpus contains the sequence of sentences for each random walk.

A key advantage of this embodiment is the use of neighbourhood information in creating the new inputs for domain-adapting the large-scale language model LLM. The embodiment creates coherent, contextualised documents which describe local areas of the domain-specific knowledge graph. This increases the information content of individual inputs compared to systems which convert e.g. single triples or random samples of individual triples.

In another embodiment of the method and system, the knowledge graph to corpus translator uses dedicated rules for translating triples in simplified RDF notation, wherein the simplified RDF notation represents several triples sharing the same subject or the same subject and predicate, and wherein a verbalizer of the knowledge graph to corpus translator expresses each simplified RDF notation in a single sentence in accordance with the dedicated rules.

A key advantage of this embodiment is the use of neighbourhood information in creating the new inputs for domain-adapting the large-scale language model LLM. The embodiment creates coherent, contextualised documents which describe local areas of the domain-specific knowledge graph. This increases the information content of individual inputs compared to systems which convert e.g. single triples or random samples of individual triples.

In another embodiment of the method and system, the knowledge graph to corpus translator verbalizes triples which express a relationship between instances as main clause sentences and triples which express a relationship between an instance and a data object as relative clauses, wherein the respective sentences are stored in the natural language corpus.

In another embodiment of the method and system, the knowledge graph to corpus translator verbalizes blank nodes in an RDF notation using relative clauses and/or relative sentences that are stored in the natural language corpus.

The computer program product comprises instructions which, when the program is executed by a computer, cause the computer to carry out the method.

The provisioning device stores and/or provides the computer program product.

The foregoing and other aspects of the present invention are best understood from the following detailed description when read in connection with the accompanying drawings. For the purpose of illustrating the invention, the drawings show embodiments that are presently preferred. However, the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:
- Fig. 1: shows a first embodiment,
- Fig. 2: shows another embodiment,
- Fig. 3: shows a domain adaptation process according to a possible exemplary embodiment,
- Fig. 4: shows an example of verbalizing knowledge graph content with random walks,
- Fig. 5: shows an example for node-oriented verbalization of knowledge graph content, and
- Fig. 6: shows a flowchart of a possible exemplary embodiment.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described components can each be hardware components or software components. For example, a software component can be a software module such as a software library; an individual procedure, subroutine, or function; or, depending on the programming paradigm, any other portion of software code that implements the function of the software component. A combination of hardware components and software components can occur, in particular, if some of the effects according to the invention are preferably exclusively implemented by special hardware (e.g., a processor in the form of an ASIC or FPGA) and some other part by software.

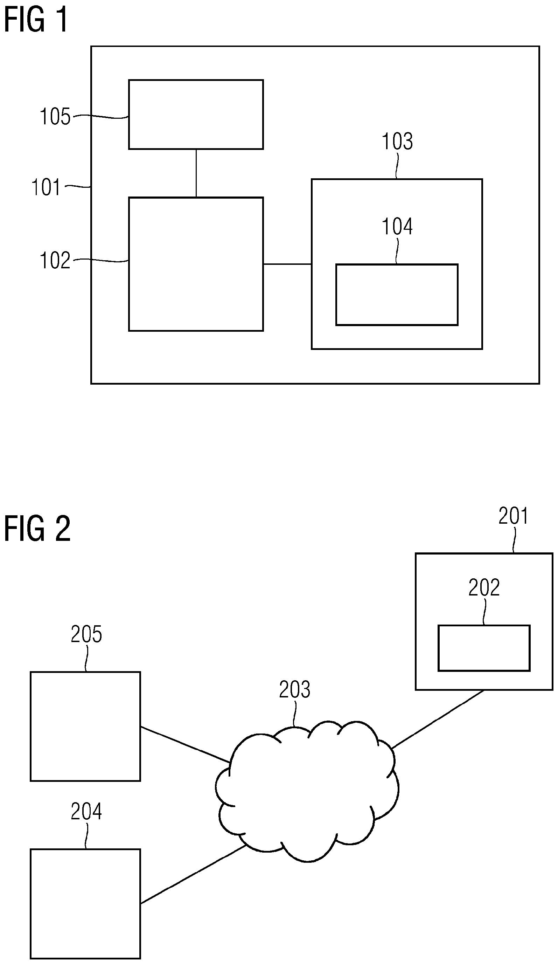

Fig. 1 shows one sample structure for computer-implementation of the invention which comprises:
- (101): computer system
- (102): processor
- (103): memory
- (104): computer program (product)
- (105): user interface

In this embodiment of the invention the computer program 104 comprises program instructions for carrying out the invention. The computer program 104 is stored in the memory 103 which renders, among others, the memory 103 and/or its related computer system 101 a provisioning device for the computer program 104. The computer system 101 may carry out the invention by executing the program instructions of the computer program 104 by the processor 102. Results of invention may be presented on the user interface 105. Alternatively, they may be stored in the memory 103 or on another suitable means for storing data.

Fig. 2 shows another sample structure for computer-implementation of the invention which comprises:
- (201): provisioning device
- (202): computer program (product)
- (203): computer network/Internet
- (204): computer system
- (205): mobile device/smartphone

In this embodiment the provisioning device 201 stores a computer program 202 which comprises program instructions for carrying out the invention. The provisioning device 201 provides the computer program 202 via a computer network/Internet 203. By way of example, a computer system 204 or a mobile device/smartphone 205 may load the computer program 202 and carry out the invention by executing the program instructions of the computer program 202.

In a variation of this embodiment, the provisioning device 201 is a computer-readable storage medium, for example a SD card, that stores the computer program 202 and is connected directly to the computer system 204 or the mobile device/smartphone 205 in order for it to load the computer program 202 and carry out the invention by executing the program instructions of the computer program 202.

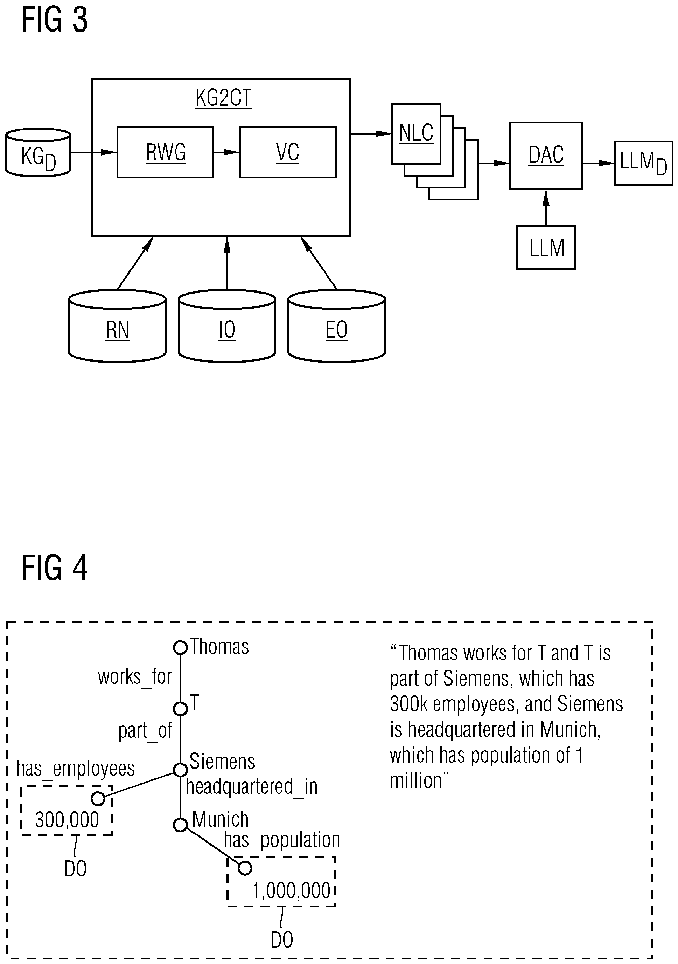

Preferably, the embodiments shown in Figs. 3 to 6 can be implemented with a structure as shown in Fig. 1 or Fig. 2.

The embodiments described in the following provide a new approach to integrate domain knowledge into a large-scale language model.

Fig. 3 shows a domain adaptation process according to a possible exemplary embodiment. For a domain of interest (denoted D), the embodiment as shown in Fig. 3 processes a large-scale language model LLM and a domain-specific knowledge graph KG_{D} with the help of a knowledge graph to corpus translator KG2CT accessing databases with relation names RN, internal ontologies IO, and external ontologies EO, and outputting a natural language corpus NLC, and a domain adaptation component DAC outputting a domain-adapted large-scale language model LLM_{D}.

The large-scale language model LLM is a state-of-the-art, large-scale language model which has been pre-trained on a large general corpus but is not specifically adapted towards correctness in the domain of interest. Typical, well-known examples include GPT-2 and GPT-3 as well as the BERT family of models. The only requirement of the current embodiment is that the large-scale language model LLM can be pre-trained with a self-supervised learning objective (for instance a causal language model or a masked language model, respectively).

The domain-specific knowledge graph KG_{D} contains semantic information about the domain D. First, the domain-specific knowledge graph KG_{D} must contain a significant amount of factual (or instance-level) information about the domain D, i.e. factually true statements about concrete entities from the domain and their interrelation. One example for this could be the statement "the switchgear with serial number ABCD0987 was designed for a rated voltage of 380 kV." This part of the domain-specific knowledge graph KG_{D} is denoted by Inst (KG_{D}).

Second, it is preferable for the domain-specific knowledge graph KG_{D} to also contain generalized, rule-like information, such as "for any gas-insulated switchgear the insulation medium must be either air or SF6, and these insulation media are not admissible for any other insulation type". This part of the domain-specific knowledge graph KG_{D} is denoted by Ont (KG_{D}).

Third, the domain-specific knowledge graph KG_{D} is preferably represented using the W3C standard RDF, potentially including its schema-level extensions such as RDFS and OWL due to the fact that the triple-based information encoding of RDF provides a natural translation into language. In situations where the domain-specific knowledge graph KG_{D} is represented using another formalism (e.g. a so-called property graph), the current embodiment first converts the domain-specific knowledge graph KG_{D} into an RDF-based representation based on prior art.

The knowledge graph to corpus translator KG2CT takes any knowledge graph represented using RDF as an input and generates a natural language corpus NLC, for example a set of natural language documents, each of which consists of a sequence of sentences. The knowledge graph to corpus translator KG2CT can be represented as a function V: KG → (S_{KG}¹, S_{KG}², ...). Several embodiments described below provide details on alternatives how this function V can be realized.

The domain adaptation component DAC implements a machine learning algorithm for domain adapting the existing large-scale language model LLM with an additional corpus (a sequence or set of sentences), here the natural language corpus NLC, by continuing pre-training. The domain adaptation component DAC can be identified with a method DA: (LLM, S¹, S², ..., Sⁿ) → LLM_{D}, which takes as input the existing large-scale language model LLM and a sequence of sentences and returns a domain-adapted large-scale language model LLM_{D} incorporating the additional information provided by the sentences. Such domain adaptation components DAC are well-known in the prior art.

A central feature of the current embodiment is the composition of the knowledge graph to corpus translator KG2CT and the domain adaptation components DAC, mapping the existing large-scale language model LLM and the domain-specific knowledge graph KG_{D} to the new, domain-adapted large-scale language model LLM_{D}. Specifically, the current embodiment first converts the domain-specific knowledge graph KG_{D} into the natural language corpus NLC using the knowledge graph to corpus translator KG2CT, and then feeds the natural language corpus NLC into the domain adaptation component DAC. In summary, the overall process can be described by DA o V: (LLM, KG_{D}) → LLM_{D}.

The pre-trained large-scale language model LLM as well as the domain adaptation component DAC are each known from the state of the art. A novel step in the current embodiment lies in the idea of verbalizing a knowledge graph as a means of using its information for domain adapting the large-scale language model LLM. Furthermore, the various embodiments described below contain specific and novel solutions for realizing such a verbalization, as they present different approaches for verbalizing the domain-specific knowledge graph KG_{D}.

RDF (in its basic form) represents any information (instance-level as well as rule-like) by means of so-called triples of subject, predicate, and object. Hereby, the subject and the predicate are always so-called Unique Resource Identifiers (or URIs), whereas the object can either be a URI, or a value of a primitive datatype (e.g. string, integer). This concept can be illustrated with a small example knowledge graph:
:Thomas rdf:type foaf:Person .
   → *"Thomas is a person." (instance-level)*
:Thomas :works_for :T .
   → *"Thomas works for T." (instance-level)*
:Thomas foaf:family_name "Hubauer" .
   → *"Thomas' family name is Hubauer." (instance-level)*
:T rdf:type :S-Unit
   → *"T is a S-Unit." (instance-level)*
:S-Unit rdfs:subClassOf foaf:Organization
   → *"Every S-Unit is an organization." (schema-level)*

In order to generate sentences in a meaningful way, a number of detail problems need to be solved. The following sections present these problems and their solutions according to a current embodiment.

### Mapping URIs to names

RDF uses so-called Unique Resource Identifiers (URIs) to identify objects of the schema level (classes and relations) as well as actual entities (instances of a class). In order to create sentences that a generic large-scale language model can make sense of, URIs of schema objects (classes and relations) should be translated into meaningful strings that the large-scale language model LLM "understands". The preferred way for this verbalization of a class or relation is to use the value of the rdfs:label (or any sub-property such as skos:prefLabel) assigned to the schema element in the ontology. In case multiple such labels exist, more specific labels should be chosen over more general ones (e.g. skos:prefLabel over rdfs:label). In case of labels being defined in multiple languages, the current embodiment picks English as English is best supported by current large-scale language models. English labels can be identified based on the @en language tag; in addition to that, labels without language tags are typically English. Both can be validated to be English using standard language models. For classes or relations not having a label of any kind assigned, the current embodiment converts the URI to a string, removes the prefix, and "naturalizes" the remainder by replacing dashes, underscores, and escaped whitespaces with regular whitespace characters.

Dependent on the concrete implementation, selected URIs can be mapped to other, pre-defined verbalizations. Typical examples for such exception rules may include:
rdf:type → "is a"
rdfs:subClassOf 4 "is a special kind of"
rdfs:label → "is named"

For URIs of instances, the current embodiment uses the URI in abbreviated notation (e.g.:thomas, ex:john, or museums:louvre) as verbalization. This avoids name clashes of e.g. :thomas and ex:thomas.

Contrary to the RDF examples given in this description, which are for mere illustration, the content of the domain-specific knowledge graph KG_{D} is completely technical, storing for example technical information on instances of physical entities from the industrial domain, such as "the switchgear with serial number ABCD0987 was designed for a rated voltage of 380 kV." This applies to all described embodiments.

### Inclusion of ontology imports

It is common practice when designing the schema-level of a knowledge graph (also called the ontology) to refer to (parts of) other, typically more generic ontologies. This way, knowledge expressed in these referenced (or imported) ontologies becomes part of the schema. Specific for the industrial context, relevant upper-level ontologies may include, but are not limited to, the ISO 15926-14 top-level ontology, QUDT, DEXPI, OPC-UA Companion Standards such as Umati, and many more. As part of its verbalization process, the current embodiment determines the "imports closure" of the domain-specific knowledge graph KG_{D} by incrementally including all referenced ontologies until no new references occur. Instead of feeding the original domain-specific knowledge graph KG_{D} into the large-scale language model LLM, the current embodiment first expands it to its import closure and then verbalizes the resulting, extended knowledge graph. This ensures that as much relevant domain information as possible is fed into the large-scale language model LLM.

Alternative implementations of the knowledge graph to corpus translator KG2CT

The embodiments of the knowledge graph to corpus translator KG2CT described in the following employ two alternative algorithms for converting a knowledge graph into a natural language corpus, for example a set of natural language documents. A first embodiment uses random walks to create coherent documents from the domain-specific knowledge graph KG_{D} and a second embodiment uses node-oriented subsets of the domain-specific knowledge graph KG_{D} to create documents containing complete information about knowledge graph instances. Random walk verbalization can be seen as a depth-first approach and node-oriented verbalization is a breadth-first approach to serialization. Of course, a third embodiment of the knowledge graph to corpus translator KG2CT could combine both approaches by simply uniting the generated natural language corpora.

### 1. Verbalising knowledge graph content with random walks

In order to make it possible to pass knowledge graph content to the domain adaptation phase of the large-scale language model LLM, the content must be converted into a natural language-like format. This is described above for individual triples, but the value of the domain-specific knowledge graph KG_{D} is not only in the individual triples but also in the related information which is represented in local neighbourhoods of the graph. The first embodiment of the knowledge graph to corpus translator KG2CT provides such neighbourhood information to the large-scale language model LLM by generating "random walk documents" with the help of a random walk generator RWG and a triple verbalizer TV as shown in Fig. 3. A random walk document is the result of verbalising the sequence of triples which constitute a random walk through the domain-specific knowledge graph KG_{D} and concatenating these sentences. Each random walk has the property that the object of each triple in the walk is the subject of the following triple. Therefore, the random walk document will exhibit a certain coherence, since the same instances or concepts are referred to in consecutive sentences, in contrast to a random choice of knowledge graph triples, which would usually not be coherent in a large graph. An example is shown in Fig. 4, where the graph includes two nodes representing data objects DO.

With sufficiently many such random walks through the domain-specific knowledge graph KG_{D}, the large-scale language model LLM will receive a representative set of data about the domain of the domain-specific knowledge graph KG_{D} for domain adaptation and will thereby learn a better understanding of the semantics of the domain.

More formally, the current embodiment assumes for the triple verbalizer TV a *verbalizer* V which, given an RDF triple, generates a sentence expressing that triple in natural language, as described above.

The random walk generator RWG generates random walks with a certain length distribution. The expected length of the random walk is a configurable parameter of the random walk generator RWG. Such methods are well known in the prior art. When generating the random walk, at each node in the graph the random walk generator RWG samples from any data type relations which are present, as shown in Fig. 4 with the triple ":Siemens has_employees 300,000". The walk continues only through triples representing relations between instances.

The process of generating a set of R random walk documents from the domain-specific knowledge graph KG_{D}, where R is a configurable parameter of the random walk generator RWG, is thus: For each random walk, generate a sentence for each triple in the walk using the triple verbalizer TV. Then concatenate the sentences in the same order as the triples they were generated from. Since the access to the knowledge graph is read-only for this process, the generation of the full set of random walk documents runs efficiently in parallel.

### 2. Verbalization of short-hand RDF notations (node-oriented subsets)

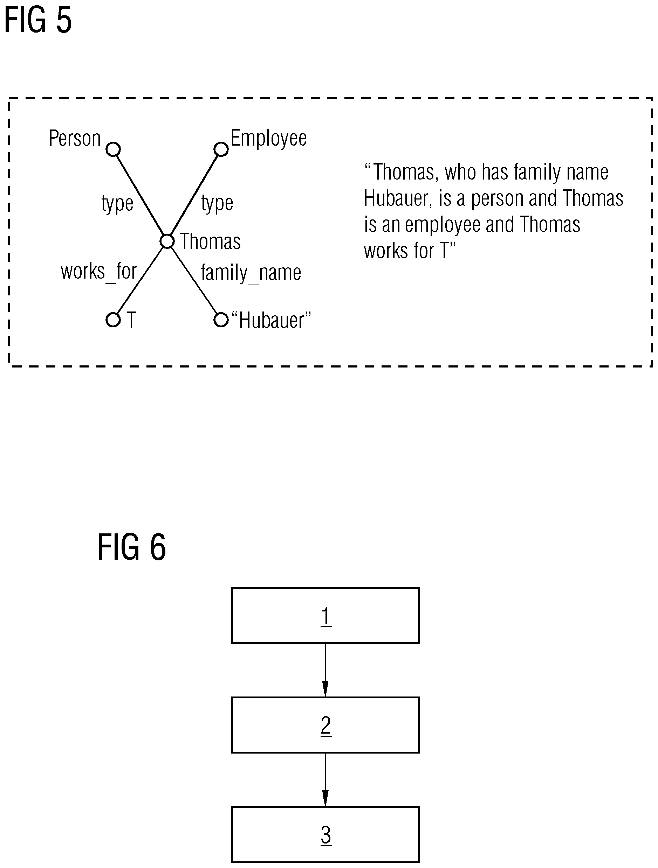

Fig. 5 shows an example for node-oriented verbalization.

RDF allows for a simplified notation of triples sharing the same subject, or even the same subject and predicate. On order to achieve a more natural language-like representation of the RDF data, the second embodiment of the knowledge graph to corpus translator KG2CT uses dedicated rules for translating these representations.

For example, the RDF statement ":Thomas rdf:type foaf:Person , org:Employee ." is equivalent to ":Thomas rdf:type foaf:Person . :Thomas rdf:type org:Employee ." The second embodiment of the knowledge graph to corpus translator KG2CT does not translate it into two independent sentences, but into one combined statement such as ":Thomas is a Person and an Employee."

In the case of ":Thomas rdf:type foaf:Person; :works_for :T", only the subject is shared. Again, instead of a translation into two sentences the second embodiment of the knowledge graph to corpus translator KG2CT translates into a combined statement such as ":Thomas is a person and works for Siemens Technology" (assuming that :T has the respective label). Thus the verbalizer used by the second embodiment of the knowledge graph to corpus translator KG2CT creates a document whose contents are derived from a set of triples which share a subject, providing a "node-oriented" verbalization.

The verbalizers used in the first and second embodiment of the knowledge graph to corpus translator KG2CT have the following subcomponents in common:

### Verbalization of literals

Whereas triples which express a relationship between instances are verbalized as main clause sentences (e.g. "Thomas works for T"), triples which express a relationship between an instance and a data object are verbalized as relative clauses (e.g. "T is part of Siemens, which has 300k employees" in Fig. 4).

### Verbalization of blank nodes

Users of RDF can avoid giving URIs to intermediate nodes by introducing so-called blank nodes. For example, the natural-language statement ":Thomas knows a Person that plays the Piano" can be represented in RDF using a blank node as
:Thomas foaf:knows [ rdf:type foaf:Person ; hobby:plays_instrument hobby:piano ] .

The current embodiment does not introduce additional URIs but translates blank nodes into relative sentences, as in the example given above (":Thomas knows a Person that plays the Piano").

Domain adaptation of the large-scale language model LLM from the content of the domain-specific knowledge graph KG_{D}

The domain adaptation process now consists of converting the domain-specific knowledge graph KG_{D} to a natural language corpus, for example a corpus of random walk documents as described for the first embodiment of the knowledge graph to corpus translator KG2CT, and using this natural language corpus to domain adapt the large-scale language model LLM. The domain adaptation process is shown in Fig. 3.

The first embodiment of the knowledge graph to corpus translator KG2CT leads to repetition in the content which is passed to the large-scale language model LLM, since any given triple may appear in multiple random walks. This however is a benefit of the embodiment, since: the repeated content does not harm the large-scale language model LLM but rather strengthens its sensitivity to the domain; the repeated content gives the large-scale language model LLM a variety of contexts in which the rest of the random walk content should be interpreted; different walks through the same neighbourhood of the domain-specific knowledge graph KG_{D} will highlight different properties of the concepts and instances in the domain-specific knowledge graph KG_{D}.

In an alternative embodiment, the creation of natural language corpus from the domain-specific knowledge graph KG_{D} is repeated at a regular interval to account for scenarios in which the content of the domain-specific knowledge graph KG_{D} changes so quickly that the domain-adapted large-scale language model LLM_{D} would otherwise be obsolete after a short period of time.

### Industrial application examples

Applications for the above-described embodiments in industry in general, or more particularly in automation solutions, are paramount, A first application is a solution recommender for customer tickets: Especially for end-user facing use cases, large-scale language models can be a natural candidate for generation of solution recommendations given a natural-language description of the problem. However, such solutions should be applicable to the product at hand (e.g. not recommend replacing parts that the product does not have) and safe (e.g. not recommend setting values outside of the safe operational boundaries).

A second application is knowledge-infused information extraction from texts: Current large-scale language models have the capability to answer questions against textual input including tables. However, extraction is not always unambiguous, leading to potentially incorrect information being extracted and fed into later processing steps (e.g. the update of a service bill of materials according to service actions described in a maintenance report). By infusing domain knowledge as part of a domain ontology describing the serviced objects along with types of service events and their implications, at least some of the above-described embodiments, when applied in this context, can ensure higher quality of the extracted information and therefore - for instance - a higher quality of the derived as-maintained bill of materials status.

At least some of the above-described embodiments can implement the first application, addressing the solution recommender problem described above by generating accurate responses to customer support requests. The corresponding application receives a text of a support request from a customer, generates a response, and then takes a number of actions which may include, but are not limited to, case-specific actions including sending the response to the customer, adding the response to a database of customer contact records, and creating links in the database to relevant properties of the support request; and fleet-level actions such as identifying other systems/customers which may be affected by similar issues and contacting them proactively.

The integration of knowledge from the domain-specific knowledge graph KG_{D} into the large-scale language model LLM enables the first application to generate response texts which are factually accurate in the domain, and which take specific properties of domain concepts into account. For instance, by adding domain-specific knowledge graph information to the large-scale language model LLM, it can generate accurate references to physical properties of components.

Fig. 6 shows a flowchart of a possible exemplary embodiment of a method and system for adapting a large-scale language model to an industrial domain.

In a storing operation 1, a graph database stores a domain-specific knowledge graph containing instance-level semantic information about the industrial domain, including true triple statements about physical entities from the industrial domain and their interrelation.

In a converting operation 2, a knowledge graph to corpus translator converts the domain-specific knowledge graph into a natural language corpus.

In a pre-training operation 3, a domain adaptation component, pre-trains the large-scale language model with the natural language corpus to a provide a domain-adapted large-scale language model.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code, and the like, operating alone or in combination. Likewise, processing strategies may include multiprocessing, multitasking, parallel processing, and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

Independent of the grammatical term usage, individuals with male, female or other gender identities are included within the term.

## Claims

1. A computer implemented method for adapting a large-scale language model (LLM) to an industrial domain, wherein the large-scale language model (LLM) is configured for pre-training with a self-supervised learning objective, wherein the following operations are performed by components, and wherein the components are hardware components and/or software components executed by one or more processors:
- storing (1), by a graph database, a domain-specific knowledge graph (KG_{D}) containing instance-level semantic information about the industrial domain, including true triple statements about physical entities from the industrial domain and their interrelation,
- converting (2), by a knowledge graph to corpus translator (KG2CT), the domain-specific knowledge graph (KG_{D}) into a natural language corpus (NLC), and
- pre-training (3), by a domain adaptation component (DAC), the large-scale language model (LLM) with the natural language corpus (NLC) to a provide a domain-adapted large-scale language model (LLM_{D}).

2. The method according to claim 1,
wherein the natural language corpus (NLC) contains
- a set of documents, each consisting of a sequence of sentences in natural language, and/or
- a sequence of sentences in natural language, and/or
- a set of sentences in natural language.

3. The method according to claim 1 or 2,
- wherein the domain-specific knowledge graph (KG_{D}) is represented using the W3C standard RDF, in particular including at least one of its schema-level extensions.

4. The method according to claim 3,
- wherein the domain-specific knowledge graph (KG_{D}) is created by converting a knowledge graph into an RDF-based representation.

5. The method according to any of the preceding claims,
- wherein the domain-specific knowledge graph (KG_{D}) contains schema-level information, in particular rules.

6. The method according to any of the preceding claims,
- wherein before or as part of the converting operation (2), upper-level industrial ontologies that are referenced in the domain-specific knowledge graph (KG_{D}) are incrementally included into the domain-specific knowledge graph (KG_{D}).

7. The method according to any of the preceding claims,
- wherein the natural language corpus (NLC) also includes original natural language documents describing the domain.

8. The method according to any of the preceding claims, wherein
- the knowledge graph to corpus translator (KG2CT) contains a random walk generator (RWG) and a triple verbalizer (TV),
- wherein the random walk generator (RWG) generates random walks through the domain-specific knowledge graph (KG_{D}), wherein each random walk consists of a sequence of triples, wherein each triple is a triple statement consisting of a subject, a predicate and an object, and wherein the object of each triple in the random walk is the subject of the following triple, except for a final triple that has no following triple,
- wherein the triple verbalizer (TV) sequentially verbalizes each sequence of triples by expressing each triple in a sentence, thereby forming a sequence of sentences for each random walk, and
- wherein natural language corpus (NLC) contains the sequence of sentences for each random walk.

9. The method according to any of the preceding claims, wherein
- the knowledge graph to corpus translator (KG2CT) uses dedicated rules for translating triples in simplified RDF notation, wherein the simplified RDF notation represents several triples sharing the same subject or the same subject and predicate, and wherein a verbalizer of the knowledge graph to corpus translator (KG2CT) expresses each simplified RDF notation in a single sentence in accordance with the dedicated rules.

10. The method according to claim 8 or 9,
- wherein the knowledge graph to corpus translator (KG2CT) verbalizes triples which express a relationship between instances as main clause sentences and triples which express a relationship between an instance and a data object as relative clauses, wherein the respective sentences are stored in the natural language corpus (NLC).

11. The method according to any of the preceding claims 8 to 10,
- wherein the knowledge graph to corpus translator (KG2CT) verbalizes blank nodes in an RDF notation using relative clauses and/or relative sentences that are stored in the natural language corpus (NLC).

12. A system for adapting a large-scale language model (LLM) to an industrial domain, wherein the large-scale language model (LLM) is configured for pre-training with a self-supervised learning objective, comprising:
- a graph database, configured for storing a domain-specific knowledge graph (KG_{D}) containing instance-level semantic information about the industrial domain, including true triple statements about physical entities from the industrial domain and their interrelation,
- a knowledge graph to corpus translator (KG2CT), configured for converting the domain-specific knowledge graph (KG_{D}) into a natural language corpus (NLC), and
- a domain adaptation component (DAC), configured for pre-training the large-scale language model (LLM) with the natural language corpus (NLC) to a provide a domain-adapted large-scale language model (LLM_{D}).

13. A computer program product comprising instructions which, when the program is executed by a computer, cause the computer to carry out a method according to one of the method claims.

14. A provisioning device for the computer program product according to the preceding claim, wherein the provisioning device stores and/or provides the computer program product.
